# DEMANDE DE BREVET EUROPEEN

(11) **EP 0 859 245 A1**
(43) Date de publication de la demande: **19.08.1998**
(21) Numéro de dépôt: 98810051.7
(22) Date de dépôt: 28.01.1998
(51) Int. Cl.: G01W 1/12, G01P 5/06, G01W 1/02

(54) **Dispositif de mesure du vent et de l'ensoleillement**

(30) Priorité: 14.02.1997 FR 9701763
(71) Demandeur: SOMFY, F-74300 Cluses (FR)
(72) Inventeur: Vignoli, Jean-Marc Nicolas, 74570 Thorens-Glieres (FR); Rigoudy, Patrick, 74350 Cuvat (FR); Terrier, Laurent, 74700 Sallanches (FR); Depaix, Daniel, 74300 Cluses (FR); Goy, François, 74290 Alex (FR); Payan, Pascal, 74970 Marignier (FR)
(74) Mandataire: Meylan, Robert Maurice

(57) **Abrégé**

Le dispositif comporte un capteur de vent à aubes et un capteur d'ensoleillement comprenant au moins un élément de captation des rayons lumineux (3,6) pour la mesure de l'ensoleillement. L'élément de captation des rayons lumineux est placé au dessus des aubes (2) du capteur de vent par rapport à la fixation du dispositif (1), au centre du dispositif et de manière fixe par rapport à celui-ci de sorte que la mesure de l'ensoleillement n'est pas gênée par les aubes du capteur de vent.

## Description

La présente invention concerne un dispositif de mesure comportant un capteur de vent à aubes et un capteur d'ensoleillement comprenant au moins un élément de captation des rayons lumineux pour la mesure de l'ensoleillement.

Des dispositifs similaires sont déjà connu dans l'art antérieur. Le brevet allemand DE 44 07 673, par exemple, décrit un dispositif de commande comprenant un capteur de vent à aubes et un capteur de luminosité composé de plusieurs cellules photoélectriques. Ces cellules sont montées sur une couronne pouvant tourner librement et de manière continue autour de l'axe médian vertical du dispositif et réparties sur le pourtour de la couronne. L'inconvénient de ce dispositif est que les aubes du capteur de vent peuvent influencer la mesure de la lumière. En effet, suivant la position du soleil par rapport au dispositif, les aubes, qu'elles soient arrêtées ou en rotation, peuvent produire une ombre sur le support du dispositif et en particulier sur les cellules photoélectriques. La mesure de la lumière peut donc être imprécise. De plus, la position radiale des cellules a également une influence sur la mesure lorsque le soleil est à l'aplomb au dessus du dispositif.

Le but de l'invention est de réaliser un dispositif de mesure palliant ces inconvénients. En particulier, l'invention se propose de réaliser un dispositif combinant un capteur de vent et un capteur d'ensoleillement dans lequel, d'une part, le capteur de vent ne gêne pas la mesure de l'ensoleillement et, d'autre part, une mesure précise de l'ensoleillement étant assurée quelle que soit la position du soleil par rapport au dispositif.

Le dispositif selon l'invention est caractérisé en ce que l'élément de captation des rayons lumineux est placé au dessus des aubes du capteur de vent par rapport à la fixation du dispositif, au centre du dispositif et de manière fixe par rapport à celui-ci de sorte que la mesure de l'ensoleillement n'est pas gênée par les aubes du capteur de vent.

Les revendications dépendante 2 à 10 définissent des modes d'exécution particuliers de l'invention.

L'invention sera mieux comprise à l'aide de la description de trois modes d'exécution de l'invention et des figures qui s'y rapportent.

La figure 1 est une vue en coupe axiale verticale du premier mode d'exécution du dispositif selon l'invention.

La figure 2 est une vue en coupe axiale verticale d'un deuxième mode d'exécution du dispositif de mesure selon l'invention.

La figure 3 est une vue en coupe axiale verticale d'un troisième mode d'exécution du dispositif de mesure selon l'invention.

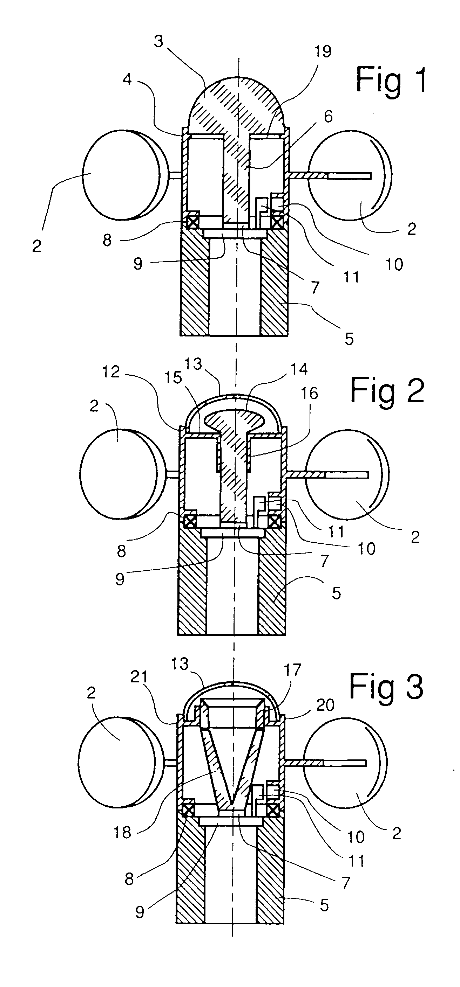

Le premier mode d'exécution est décrit en référence à la figure 1.

Le dispositif de mesure 1 comporte un capteur de vent à aubes 2 montées sur un support 4, un élément de captation des rayons lumineux en forme de dôme optique 3 et un support de fixation 5 immobile destiné à fixer le dispositif. Le support 4 des aubes 2 est monté sur un palier 8 lui-même fixé au support de fixation 5 et il est libre en rotation autour de l'axe vertical du dispositif par rapport au support de fixation 5. Le dôme optique 3 est en forme de demi-sphère dont la face plane est prolongée par un puits de lumière 6 de forme cylindrique, ce puits 6 guidant les rayons lumineux renvoyés par le dôme 3 jusqu'à une cellule photosensible 7 fixée à l'autre extrémité du puits 6. Un circuit imprimé 9 est placé dans le support de fixation 5. Le dôme 3, son puits 6 et la cellule photosensible 7 étant fixes par rapport au support de fixation 5, ils peuvent être monté directement sur le circuit imprimé 9.

La vitesse de rotation des aubes 2 par rapport au support de fixation 5 est mesuré au moyen d'un capteur de rotation à effet Hall. Ce capteur comporte une sonde 11 à effet Hall montée directement sur le circuit imprimé et un aimant 10 qui est fixé au support 4 des aubes 2 et tourne donc à la même vitesse que celui-ci.

Le support 4 des aubes 2 comprend en outre un plateau 19 dans sa partie supérieure, ce plateau étant percé d'un trou en son centre pour laisser passer le puits de lumière 6. Le support 4 et ses aubes 2 devant pouvoir tourner librement par rapport au dôme pour la mesure du vent, un léger jeu est prévu entre la face inférieure du dôme et la face supérieure du plateau 19.

La figure 2 montre le deuxième mode d'exécution du dispositif selon l'invention. Les éléments identiques au premier mode d'exécution ont été désignés par les mêmes références. On retrouve un support de fixation 5 dans lequel sont logés le circuit imprimé 9 et le palier 8. Une sonde à effet Hall 11 est montée sur le circuit 9 et un aimant 10 correspondant est fixé dans le support 12 des aubes 2.

Le dispositif de captation des rayons lumineux de ce mode d'exécution diffère de celui du premier mode en ce que le dôme est formé par une membrane diffusante 13 à l'intérieur de laquelle se trouve un puits de lumière 14 guidant les rayons lumineux sur la cellule photoélectrique 7. Le puits 14 de ce mode d'exécution est de forme générale cylindrique et son extrémité supérieure a une forme sphérique aplatie d'un diamètre inférieur à celui du dispositif. Dans ce mode d'exécution, la partie supérieure du support 12 des aubes 2 comporte un plateau 15 percé en son centre et prolongé en direction du support de fixation par un tube 16 dans lequel le puits de lumière 14 cylindrique vient s'emboîter. La membrane diffusante 13 est en outre fixée directement sur le support 12. A cet effet, le bord extérieur du support 12 des aubes 2 peut se prolonger verticalement au delà du plateau 15 de manière à former un rebord facilitant la fixation de la membrane 13.

L'un des avantages de ce mode est qu'il présente une bonne étanchéité aux éléments extérieurs. En particulier, le joint entre l'extrémité du puits de lumière 14 et le support 12 des aubes 2 est protégé par la membrane diffusante 13.

Le troisième mode d'exécution est décrit en référence à la figure 3. Dans ce mode, les éléments identiques à ceux des deux modes précédents ont à nouveau été désignés par les mêmes références. Le dispositif comporte un support de fixation 5, un circuit imprimé 9, un palier 8, une sonde à effet Hall 11 et un aimant 10 monté sur le support 16 des aubes 2 et coopérant avec la sonde il pour mesurer la vitesse de rotation des aubes 2. Ce mode d'exécution comporte également un dôme en forme de membrane diffusante 13.

Dans ce mode d'exécution, l'élément de captation des rayons lumineux comprend deux parties. La première partie a la forme d'un cylindre creux 17 dont le bord supérieur est taillé intérieurement en biseau. La deuxième partie a la forme d'un cône 18 créant un collecteur de rayons lumineux, l'extrémité la plus large du cône 18 étant jointe à la partie inférieure du cylindre 17 et l'extrémité la plus étroite du cône étant fixée à la cellule photosensible 7, de sorte que les rayons lumineux captés par le cylindre 17 sont guidés par le collecteur 18 sur la cellule photosensible 7.

Dans ce mode d'exécution en outre, le support 21 des aubes 2 comprend, dans sa partie supérieure, un plateau 20 percé d'une ouverture centrale et dont le bord de l'ouverture se prolonge verticalement. Le cylindre vient alors s'emboîter dans cette ouverture centrale. Le bord extérieur du support 21 peut se prolonger verticalement au delà du plateau 20 formant ainsi un rebord facilitant la fixation de la membrane diffusante 13 sur le support 21.

Le support de fixation 5, les supports des aubes 4, 12 21 et les aubes 2 elles-mêmes peuvent être réalisés en toute matière, par exemple en matière plastique. De préférence, le dôme 3, les puits de lumière 6, 16, 18 et le cylindre creux 17 sont réalisés en polyméthacrylate et la membrane 13 du diffuseur de lumière en polycarbonate. Des matières équivalentes sont bien sûr envisageables.

Les exemples donnés le sont à titre illustratif et des variations sont possibles dans le cadre de la protection revendiquée.

## Revendications

1. Dispositif de mesure comportant un capteur de vent à aubes (2) et un capteur d'ensoleillement comprenant au moins un élément de captation des rayons lumineux (3,6; 13,14; 17,18) pour la mesure de l'ensoleillement, caractérisé en ce que l'élément de captation des rayons lumineux est placé au dessus des aubes (2) du capteur de vent par rapport à la fixation du dispositif (1), au centre du dispositif et de manière fixe par rapport à celui-ci de sorte que la mesure de l'ensoleillement n'est pas gênée par les aubes (2) du capteur de vent.

2. Dispositif selon la revendication 1, caractérisé en ce que l'élément de captation des rayons lumineux comprend un dôme optique (3) et un puits (6) prolongeant le dôme (3) à l'intérieur du dispositif et guidant les rayons lumineux sur une cellule photosensible (7).

3. Dispositif selon la revendication 1, caractérisé en ce que le dispositif de captation des rayons lumineux comporte une membrane diffusante (13) et un guide (14) des rayons lumineux les amenant sur une cellule photosensible (7).

4. Dispositif selon la revendication 1, caractérisé en ce que le dispositif de captation des rayons lumineux comporte une membrane diffusante (13), un cylindre (17) et un collecteur (18) des rayons lumineux fixé au cylindre et guidant les rayons sur une cellule photosensible (7).

5. Dispositif selon l'une des revendication 2 à 4, caractérisé en ce que la cellule photosensible (7) est montée sur un circuit imprimé (9).

6. Dispositif selon la revendication 2, caractérisé en ce que le dôme (3) et le puits (6) sont réalisés en polyméthacrylate.

7. Dispositif selon la revendication 3, caractérisé en ce que la membrane diffusante (13) est réalisée en polycarbonate et le guide (14) est réalisé en polyméthacrylate.

8. Dispositif selon la revendication 4, caractérisé en ce que la membrane diffusante (13) est réalisée en polycarbonate, et le cylindre (17) et le collecteur (18) des rayons lumineux sont réalisés en polyméthacrylate.

9. Dispositif selon l'une des revendications 1 à 8, caractérisé en ce qu'il comprend en outre un dispositif de mesure (10,11) de la vitesse de rotation des aubes (2) par rapport au support de fixation (5).

10. Dispositif selon la revendication 9, caractérisé en ce que le dispositif de mesure de la vitesse de rotation comporte une sonde (11) à effet Hall montée sur le circuit imprimé (9) et un aimant (10) solidaire du support (4;12;21) des aubes (2).
